(19) Europäisches Patentamt
European Patent Office
Office européen des brevets

(11) **EP 3 867 683 B1**

(12) **EUROPÄISCHE PATENTSCHRIFT**

(45) Veröffentlichungstag und Bekanntmachung des Hinweises auf die Patenterteilung:
**03.09.2025 Patentblatt 2025/36**

(21) Anmeldenummer: **19797572.5**

(22) Anmeldetag: **11.10.2019**

(51) Internationale Patentklassifikation (IPC):
**G02B 21/00** (2006.01) **G02B 21/02** (2006.01)
**G02B 27/00** (2006.01)

(52) Gemeinsame Patentklassifikation (CPC):
**G02B 27/0068; G02B 21/0072; G02B 21/02**

(86) Internationale Anmeldenummer:
**PCT/EP2019/077615**

(87) Internationale Veröffentlichungsnummer:
**WO 2020/078845 (23.04.2020 Gazette 2020/17)**

(54) **VERFAHREN ZUR KORREKTION EINES SPHÄRISCHEN ABBILDUNGSFEHLERS EINES MIKROSKOPS UND MIKROSKOP**

METHOD FOR CORRECTING A SPHERICAL ABERRATION OF A MICROSCOPE, AND MICROSCOPE

PROCÉDÉ DE CORRECTION D'UNE ABERRATION SPHÉRIQUE D'UN MICROSCOPE ET MICROSCOPE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.10.2018 DE 102018126007**

(43) Veröffentlichungstag der Anmeldung:
**25.08.2021 Patentblatt 2021/34**

(73) Patentinhaber: **Leica Microsystems CMS GmbH 35578 Wetzlar (DE)**

(72) Erfinder:
• **SCHUMANN, Christian 35423 Lich (DE)**
• **CAPELLMANN, Ronja 35578 Wetzlar (DE)**
• **WEISS, Alexander 35440 Linden (DE)**

(74) Vertreter: **Schaumburg und Partner Patentanwälte mbB Mauerkircherstraße 31 81679 München (DE)**

(56) Entgegenhaltungen:
**EP-A1- 1 970 746 EP-A1- 1 988 417
DE-A1- 102017 105 926 DE-A1- 102017 105 928**

**Beschreibung**

Die Erfindung betrifft ein Verfahren zur Korrektion eines sphärischen Abbildungsfehlers eines Mikroskops mit einem Objektiv und einem Deck- oder Tragglas, bei dem ein in dem Objektiv angeordnetes Korrektionsmittel zum Korrigieren des sphärischen Abbildungsfehlers vorgesehen ist. Die Erfindung betrifft ferner ein Mikroskop mit einer Einstelleinrichtung zur Korrektion eines sphärischen Abbildungsfehlers.

Probenbedingte Abbildungsfehler, insbesondere Brechungsindexfehlanpassung, sind der Haupteinfluss auf die Qualität einer lichtmikroskopischen Abbildung einer Probe. Hauptursache für Brechungsindexfehlanpassung in der biologischen Mikroskopie sind eine unpassende optische Dicke des Deckglases und ein unpassender Brechungsindex eines optischen Mediums, in dem die Probe eingebettet ist.

Aus dem Stand der Technik sind eine Vielzahl von Objektiven mit Korrektionsmittel bekannt, welche zur Kompensation eines probeninduzierten sphärischen Abbildungsfehlers nutzbar sind.

Aus der US 6,563,634 B2 ist ein Mikroskop mit einer Korrektionslinse zum Korrigieren von Abbildungsfehlern, insbesondere der Dicke eines Deckglases, einer Petrischale oder eines Objektträgers bekannt. US 6,563,634 B2 offenbart ebenfalls ein Verfahren dazu, die Lage einer Fokusebene des Objektivs mithilfe der Korrektionslinse zu korrigieren.

Aus der US 9,411,142 B2 ist ein Verfahren für die Einstellung eines Korrekturrings bei einer Fokussierung eines Mikroskops bekannt. Das Verfahren beruht auf einer Interpolation von Stützstellen, die durch Einstellungen des Korrekturrings gegeben sind, die eine Bedienperson definieren muss. Mittels dieses Verfahrens für Proben mit einer großen Brechungsindexvariation kann der Verlauf der Einstellung des Korrekturringes an die Probe angepasst werden. Eine genaue Bewertung und damit die Ermittlung der Stützstellen ist jedoch aufwändig und erfordert eine erfahrene Bedienperson. Ferner ist für die vorgenannte Einstellung das Erzeugen einer Vielzahl von Bilder erforderlich, was insbesondere bei lichtempfindlichen Proben, z.B. aufgrund des Ausbleichens von Fluoreszenz oder Phototoxizität, ungünstig ist.

Aus der US 2005/0024718 A1 ist ein Mikroskop mit einem Objektiv, das eine Korrektionslinse hat, und einer Einstelleinrichtung zum Einstellen der Korrektionslinse bekannt. Die Einstelleinrichtung stellt die Korrektionslinse auf Grundlage eines durch die Bedienperson eingegebenen Brechungsindex einer Probe und einer in einem Probenraum gemessenen Temperatur ein.

Das Dokument EP 1 988 417 A1 offenbart ein Mikroskop mit einem Objektiv, das einen Korrekturring hat. Das Dokument offenbart ferner ein Verfahren zum Korrigieren eines Abbildungsfehlers, der durch Variationen in der optischen Dicke eines Deckglases entsteht.

Zum Stand der Technik wird ferner auf die DE 10 2017 105 928 A1 verwiesen, die Mikroskop und Verfahren zum Abbilden eines Objektes offenbart.

Es ist Aufgabe der Erfindung, ein Verfahren zur Korrektion eines sphärischen Abbildungsfehlers eines Mikroskops und ein Mikroskop mit einer Einstelleinrichtung zur Korrektion eines sphärischen Abbildungsfehlers anzugeben, die eine Korrektion unter Berücksichtigung von messbaren Eigenschaften der Probe und des Probenraums ermöglichen.

Diese Aufgabe wird durch ein Verfahren mit den Merkmalen des Anspruchs 1 und durch ein Mikroskop mit den Merkmalen des Anspruchs 9 gelöst. Vorteilhafte Weiterbildungen finden sich in den abhängigen Ansprüchen.

Das erfindungsgemäße Verfahren dient zur Korrektion eines sphärischen Abbildungsfehlers eines Mikroskops mit einem Objektiv und einem Deck- oder Tragglas, bei dem ein in dem Objektiv angeordnetes Korrektionsmittel zum Korrigieren des sphärischen Abbildungsfehlers vorgesehen ist. Durch das Mikroskop wird der Brechungsindex eines an das Deck- oder Tragglas grenzenden optischen Mediums und die Dicke des Deck- oder Tragglases entlang der optischen Achse des Objektivs ermittelt. Auf Grundlage des Brechungsindex des optischen Mediums und der Dicke des Deck- oder Tragglases wird der sphärische Abbildungsfehler ermittelt. Auf Grundlage des sphärischen Abbildungsfehlers wird eine Stellgröße ermittelt, anhand derer das Korrektionsmittel so eingestellt wird, dass der sphärische Abbildungsfehler korrigiert ist.

Unter Deck- oder Tragglas wird in dieser Anmeldung insbesondere ein Deckglas, ein Objektträger, ein Boden einer Petrischale oder ein Boden eines Näpfchens einer Mikrotiterplatte verstanden.

Erfindungsgemäß werden durch das Mikroskop Eigenschaften der abzubildenden Probe und des Probenraums, insbesondere der Brechungsindex des optischen Mediums und die Dicke des Deck- oder Tragglases, bestimmt. Aus den durch das Mikroskop bestimmten Eigenschaften wird dann der sphärische Abbildungsfehler ermittelt. Der ermittelte sphärische Abbildungsfehler wird durch eine Einstellung des Korrektionsmittels korrigiert bzw. kompensiert.

Die Bestimmung der Eigenschaften der abzubildenden Probe und des Probenraums durch das Mikroskop selbst, d.h. in-situ, ist vorteilhaft gegenüber bekannten Verfahren, bei denen eine Ermittlung des Abbildungsfehlers ex-situ, beispielsweise mithilfe eines Referenzpräparates, erfolgt, da hier keine Korrelation zwischen dem mithilfe des Referenzpräparates ermittelten Abbildungsfehler und Abbildungsfehler beim Abbilden der Probe sichergestellt werden kann.

Die Ermittlung des Abbildungsfehlers erfolgt beispielsweise durch Modellieren eines Wellenfrontfehlers aus den durch das Mikroskop ermittelten Eigenschaften der Probe und des Probenraums. Modelle für Wellenfrontfehler basierend auf Eigenschaften der Probe und des Probenraums sind beispielsweise aus P. Török et al., "Electromagnetic diffraction of light focused through a planar interface between materials of mismatched refractive indices: an integral representation", J. Opt. Soc. Am. A 12 (1995), S. 325-332, bekannt. Auf Grundlage des ermittelten sphärischen Abbildungsfehlers kann eine Einstellung des Korrektionsmittels derart erfolgen, dass ein durch das Korrektionsmittel induzierter weiterer sphärischer Abbildungsfehler den ermittelten sphärischen Abbildungsfehler kompensiert, wodurch der ermittelte sphärische Abbildungsfehler korrigiert wird.

In einer bevorzugten Ausführungsform erfolgt das Ermitteln der Stellgröße, anhand derer das Korrektionsmittel eingestellt wird, indem ein durch den sphärischen Abbildungsfehler und einen bekannten durch das Korrektionsmittel induzierten weiteren sphärischen Abbildungsfehler gebildeter Gesamtabbildungsfehler minimiert wird.

In einer bevorzugten Ausführungsform werden durch das Mikroskop ein mechanischer Abstand zwischen dem Objektiv und einer Objektebene ermittelt und der sphärische Abbildungsfehler auf Grundlage dieses mechanischen Abstands ermittelt. Der mechanische Abstand kann beispielsweise mittels eines kodierten oder automatisierten Fokustriebs des Objektivs ermittelt werden, sobald die Position der probenzugewandten Oberfläche des Deck- oder Tragglases bekannt ist. Diese Position kann beispielsweise mit einem geeigneten Autofokussystem ermittelt werden. Alternativ kann der mechanische Abstand zwischen dem Objektiv und der Objektebene durch eine Bedienperson eingegeben werden.

In einer besonders bevorzugten Ausführungsform werden das Ermitteln des mechanischen Abstands zwischen dem Objektiv und der Objektebene, das Ermitteln des sphärischen Abbildungsfehlers und das Ermitteln der Stellgröße, anhand derer das Korrektionsmittel eingestellt wird, für die Objektebene und/oder weitere Objektebenen wiederholt durchgeführt. Insbesondere werden das Ermitteln des mechanischen Abstands zwischen dem Objektiv und der Objektebene, das Ermitteln des sphärischen Abbildungsfehlers und das Ermitteln der Stellgröße in einer Dauerschleife wiederholt, während das Objektiv auf die Objektebene eingestellt wird. Hierdurch ist auch während eines Fokussiervorganges des Objektivs eine Korrektion des sphärischen Abbildungsfehlers möglich.

Vorzugsweise erfolgt das Ermitteln des sphärischen Abbildungsfehlers auf Grundlage des Brechungsindex des Deck- oder Tragglases. Der Brechungsindex des Deck- oder Tragglases ist entweder vorbekannt - die Brechungsindizes verschiedener Deckgläser sind beispielsweise in der ISO 8255-1 genormt - oder wird ex-situ ermittelt und dann dem Mikroskop durch eine Bedienperson eingegeben. Besonders bevorzugt erfolgt die Bestimmung der Dicke des Deck- oder Tragglases zur Ermittlung des sphärischen Abbildungsfehlers durch das Mikroskop selbst.

Vorzugsweise wird zwischen dem Objektiv und dem Deck- oder Tragglas ein Immersionsmedium eingebracht. Das Ermitteln des sphärischen Abbildungsfehlers erfolgt auf Grundlage des Brechungsindex des Immersionsmediums. Der Brechungsindex des Immersionsmediums kann insbesondere durch das Mikroskop selbst bestimmt werden.

In einer bevorzugten Ausführungsform werden zur Ermittlung der Stellgröße, anhand derer das Korrektionsmittel eingestellt wird, wenigstens ein Wert der Stellgröße und ein dem Wert der Stellgröße zugeordneter Wert des sphärischen Abbildungsfehlers durch das Objektiv bereitgestellt. Der Wert der Stellgröße kann beispielsweise aus optischen Daten des Objektivs errechnet, oder auch interferometrisch anhand eines individuellen Objektivs ermittelt werden.

In einer besonders bevorzugten Ausführungsform wird der dem Wert der Stellgröße zugeordnete Wert des sphärischen Abbildungsfehlers als Entwicklungskoeffizienten orthogonaler Polynome, insbesondere Zernike-Polynome, bereitgestellt. Dies ist eine besonders einfache Art und Weise, den sphärischen Abbildungsfehler zu quantifizieren.

Die Erfindung betrifft ferner ein Mikroskop, umfassend ein Objektiv mit einem Korrektionsmittel, das zum Korrigieren eines sphärischen Abbildungsfehlers einstellbar ist, und ein Deck- oder Tragglas. Das Mikroskop hat eine Einstelleinrichtung zum Einstellen des Korrektionsmittels. Die Einstelleinrichtung ist ausgebildet, den Brechungsindex eines an das Deck- oder Tragglas grenzenden optischen Mediums und/oder die Dicke des Deck- oder Tragglases entlang der optischen Achse des Objektivs zu ermitteln, auf Grundlage des Brechungsindex des optischen Mediums und/oder der Dicke des Deck- oder Tragglases einen sphärischen Abbildungsfehler zu ermitteln, und auf Grundlage des sphärischen Abbildungsfehlers eine Stellgröße zu ermitteln, anhand derer das Korrektionsmittel so einstellbar ist, dass der sphärische Abbildungsfehler korrigiert ist.

Vorzugsweise umfasst das Korrektionsmittel wenigstens eine Linse, die zur Korrektur von Abbildungsfehlern entlang der optischen Achse des Objektivs bewegbar ist.

Es zeigen:

Figur 1    eine schematische Darstellung eines Mikroskops als Ausführungsbeispiel;
Figur 2    ein Flussdiagramm, das eine Ausführungsform des erfindungsgemäßen Verfahrens zur Korrektion eines sphärischen Abbildungsfehlers mittels des Mikroskops nach Figur 1 zeigt.

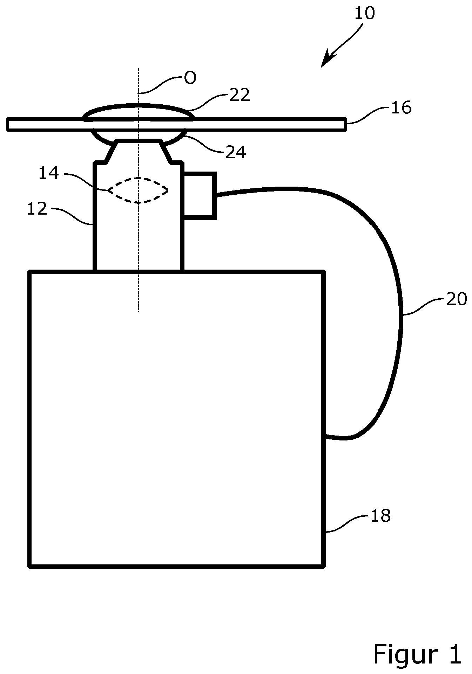

Figur 1 zeigt ein Mikroskop 10 als Ausführungsbeispiel. Das Mikroskop 10 weist ein Objektiv 12 auf, das auf ein Deckglas 16 gerichtet ist. Das Objektiv 12 umfasst ein Korrektionsmittel 14, das zum Korrigieren eines Abbildungsfehlers einstellbar und beispielhaft als eine Linse ausgebildet ist, die entlang der optischen Achse O des Objektivs 12 verschiebbar ist. Das Mikroskop 10 umfasst ferner eine Steuereinheit 18, die über ein externes Kabel 20 mit dem Objektiv 12 verbunden ist und welche die verschiedenen Objektivkomponenten ansteuert.

Auf dem Deckglas 16 befindet sich ein optisches Medium 22, in das eine Probe eingebettet ist und das im Weiteren als Einbettmedium 22 bezeichnet wird. Zwischen dem Objektiv 12 und dem Deckglas 16 ist ferner ein Immersionsmedium 24 eingebracht.

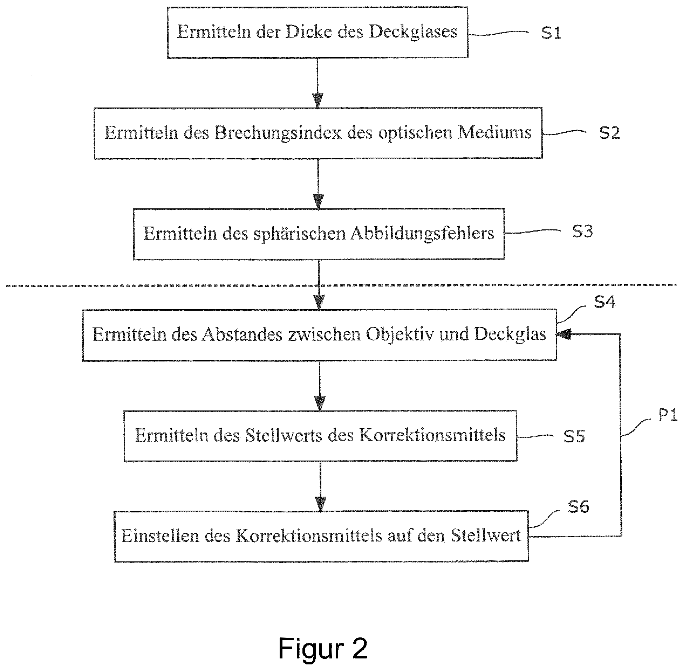

Figur 2 zeigt ein Flussdiagramm, das eine Ausführungsform des erfindungsgemäßen Verfahrens zur Korrektion eines sphärischen Abbildungsfehlers mittels des Mikroskops 10 nach Figur 1 zeigt.

In einem ersten Schritt S1 wird die Dicke des Deckglases 16 entlang der optischen Achse O des Objektivs 12 ermittelt. Hierzu wird beispielsweise unter schrägem Einfall ein Messlichtbündel durch das Objektiv 12 auf das Deckglas 16 gelenkt. Durch Teilreflexionen des Messlichtbündels an einer ersten durch das Deckglas 16 und des Immersionsmedium 24 gebildeten optischen Grenzfläche und an einer zweiten durch das Deckglas 16 und das Einbettmedium 22 gebildeten optischen Grenzfläche werden zwei räumlich getrennte Reflexionslichtbündel erzeugt. Die beiden Reflexionslichtbündel werden durch das Objektiv 12 empfangen und auf einen positionssensitiven Detektor gelenkt. Auf Grundlage der erfassten Einfallsorte der beiden Reflexionsbündel auf dem positionssensitiven Detektor kann die Dicke des Deckglases ermittelt werden.

In einem zweiten Schritt S2 wird der Brechungsindex des Einbettmediums 22 ermittelt. Dies kann beispielsweise dadurch erfolgen, dass die Intensitäten der beiden im ersten Schritt S1 erzeugten Reflexionslichtbündel mittels des positionssensitiven Detektors erfasst werden. Auf Grundlage der erfassten Intensitäten der beiden Reflexionslichtbündel kann der Brechungsindex des Einbettmediums 22 ermittelt werden, da die Intensitäten der beiden Reflexionslichtbündel von der Reflexion und der Transmission des Messlichtbündels an den beiden Grenzflächen abhängen, die durch das Deckglas 16 und das Einbettmedium 22 bzw. das Immersionsmedium 24 definiert sind. Die Reflexions- und Transmissionsvorgänge, auf denen letztlich die Intensitäten der beiden räumlich voneinander getrennten Reflexionslichtbündel beruhen, werden somit wesentlich durch die Brechungsindizes des Deckglases 16 sowie des Einbettmediums 22 und des Immersionsmediums 24 bestimmt.

In einem dritten Schritt S3 wird aus der Dicke des Deckglases 16 entlang der optischen Achse O des Objektivs und dem Brechungsindex des Einbettmediums 22 ein sphärischer Abbildungsfehler ermittelt.

Aus dem Brechungsindex des an das Deckglas 16 grenzenden Einbettmediums 22 und der Dicke des Deckglases 16 entlang der optischen Achse O des Objektivs 12 kann der Abbildungsfehler in Form eines Wellenfrontfehlers bestimmt werden zu

$$\psi(r) = z\sqrt{n_{Spc}^2 - r^2 NA^2} + \Delta d\sqrt{n_{Dgl}^2 - r^2 NA^2} - (z + \Delta d)\sqrt{n_{Imm}^2 - r^2 NA^2} \quad (1)$$

Dabei ist r eine auf den Einheitskreis normierte radiale Koordinate der Austrittpupille des Objektivs 12, z eine mechanische Fokuslänge, $n_{spc}$ der Brechungsindex des an das Deckglas 16 grenzenden Einbettmediums 22, $n_{Imm}$ der bekannte Brechungsindex des zwischen dem Objektiv und dem Deckglases eingebrachten Immersionsmediums 24, $\Delta d$ die Abweichung der Deckglasdicke entlang der optischen Achse O des Objektivs 12 von der nominellen Dicke des Deckglases 16 und NA die numerische Apertur des Objektivs 12.

In einem vierten Schritt S4 wird ein mechanischer Abstand zwischen dem Objektiv 12 und dem Deckglas 16 mittels eines kodierten Fokustriebs des Objektivs 12 auf Grundlage der Position einer probenzugewandten Oberfläche des Deckglases 16 bestimmt. Diese Position kann mit beispielsweise einem geeigneten Autofokussystem ermittelt werden. Alternativ kann der mechanische Abstand durch eine Bedienperson eingegeben werden.

In einem fünften Schritt S5 wird auf Grundlage des im dritten Schritt S3 ermittelten sphärischen Abbildungsfehlers eine Stellgröße ermittelt, anhand derer das Korrektionsmittel 14 so eingestellt wird, dass der sphärische Abbildungsfehler korrigiert ist. Die Ermittlung der Stellgröße erfolgt, indem aus dem im dritten Schritt S3 ermittelten sphärischen Abbildungsfehler und einem weiteren durch das Korrektionsmittel 14 induzierten sphärischen Abbildungsfehler, der eine Funktion lediglich der Stellgröße ist, eine Summe - im Folgenden auch Gesamtabbildungsfehler genannt - gebildet und der quadratische Mittelwert über die gesamte Pupille dieser Summe minimiert wird. Auch der Gesamtabbildungsfehler ist somit eine Funktion lediglich der Stellgröße. Werden sowohl der ermittelte sphärische Abbildungsfehler als auch der durch das Korrektionsmittel induzierte sphärischen Abbildungsfehler bis zur N-ten Ordnung nach Zernike-Polynomen entwickelt, lässt sich das quadratische Mittel des Gesamtabbildungsfehlers schreiben als

$$\sum_{k=1}^{N} A_k \left[\phi_k(c) + \psi_k(z, n_{Spc}, \Delta d)\right]^2 (2)$$

Dabei sind $A_k$ Normierungskonstanten, $\psi_k$ die Koeffizienten der Zernike-Polynome des ermittelten sphärischen Abbildungsfehlers, wobei k = 0 dem Koeffizienten des Zernike-Polynoms $Z_0^0$ entspricht, k = 1 dem Zernike-Polynom $Z_2^0$ usw. entspricht und $\phi_k$ die Koeffizienten der Zernike-Polynome des durch das Korrektionsmittel 14 induzierten sphärischen Abbildungsfehlers, die von der mit c bezeichneten Stellgröße abhängig sind. Vorzugsweise wird der Anteil des reinen Defokus $\psi_d(r) = \frac{1}{n_{Imm}^2} \sqrt{n_{Imm}^2 - NA^2}$ aus den Entwicklungskoeffizienten entfernt. Durch Ableiten von Gleichung (2) erhält man die folgende Bedingung für ein Extremum

$$0 = \sum_{k=1}^{N} A_k \frac{d\phi_k(c)}{dc}\left[\phi_k(c) + \psi_k(z, n_{Spc}, \Delta d)\right] \qquad (3)$$

Gleichung (3) kann nun nach den im Folgenden mit $c_{opt}$ bezeichneten optimalen Wert der Stellgröße aufgelöst werden, anhand dessen das Korrektionsmittel 14 so eingestellt werden kann, dass der sphärische Abbildungsfehler korrigiert bzw. kompensiert ist. Dies kann beispielsweise mittels iterativer numerischer Verfahren erfolgen, wie sie beispielsweise aus "Numerical Recipes, The Art of Scientific Computing", Cambridge University Press, 3. Auflage. 2007, Seiten 487 bis 502, ISBN 0-521-88068-8" bekannt sind. Für den Fall einer Reihenentwicklung bis zur vierten Ordnung (N = 4) lässt sich $c_{opt}$ sogar analytisch angeben. Insbesondere für den Fall, dass die Koeffizienten $\phi_k$ der Zernike-Polynome des durch das Korrektionsmittel 14 induzierten sphärischen Abbildungsfehlers nur linear von der Stellgröße abhängen oder sich in geeigneter Weise linearisieren lassen, erhält man die folgende Lösung

$$c_{opt} = -\frac{\sum_{k=1}^{N} A_k \psi_k(z, n_{Spc}, \Delta d)}{\sum_{k=1}^{N} A_k \phi_k} \qquad (4)$$

Vorzugsweise erfolgt eine Reihenentwicklung des ermittelten sphärischen Abbildungsfehlers und des durch das Korrektionsmittel 14 induzierten sphärischen Abbildungsfehlers bis zur zehnten Ordnung (N = 10). Für diese Ordnung sind die notwendigen Rechenoperationen sowohl für eine lineare Anhängigkeit von $\phi_k(c)$ als auch für eine nichtlineare Abhängigkeit numerisch gut handhabbar und auch auf einfachen Bausteinen wie einem PIC (programmable interrupt controller) umsetzbar.

In einem sechsten Schritt S6 wird das Korrektionsmittel 14 auf die im fünften Schritt S5 ermittelte Stellgröße $c_{opt}$ eingestellt. Hierdurch ist der im dritten Schritt S3 ermittelte sphärische Abbildungsfehler korrigiert.

Der vierte bis sechste Schritt S4, S5, S6 werden für weitere Objektebenen 12 wiederholt durchgeführt, wie in Figur 2 durch einen Pfeil P1 verdeutlicht ist.

Bezugszeichenliste

10    Mikroskop
12    Objektiv
14    Korrektionsmittel
16    Deckglas
18    Steuereinheit
20    Kabel
22    Einbettmedium
24    Immersionsmedium
P1    Pfeil

**Patentansprüche**

1.  Verfahren zur Korrektion eines sphärischen Abbildungsfehlers eines Mikroskops (10) mit einem Objektiv (12) und einem Deck- oder Tragglas (16), bei dem ein in dem Objektiv (12) angeordnetes Korrektionsmittel zum Korrigieren des sphärischen Abbildungsfehlers vorgesehen ist, **dadurch gekennzeichnet, dass** durch das Mikroskop (10) der Brechungsindex eines an das Deck- oder Tragglas (16) grenzenden optischen Mediums (22, 24) und/oder die Dicke des Deck- oder Tragglases (16) entlang der optischen Achse des Objektivs (12) ermittelt wird,

    auf Grundlage des Brechungsindex des optischen Mediums (22 ,24) und/oder der Dicke des Deck- oder Tragglases (16) der sphärische Abbildungsfehler ermittelt wird, und
    auf Grundlage des sphärischen Abbildungsfehlers eine Stellgröße ermittelt wird, anhand derer das Korrektionsmittel (14) so eingestellt wird, dass der sphärische Abbildungsfehler korrigiert ist,

wobei die Stellgröße rechnerisch ermittelt wird, in dem der quadratische Mittelwert der Summe des sphärischen Abbildungsfehlers und eines weiteren durch das Korrektionsmittels (14) induzierten sphärischen Abbildungsfehlers über die gesamte Pupille minimiert wird.

2. Verfahren nach Anspruch 1, **dadurch gekennzeichnet, dass** das Ermitteln der Stellgröße, anhand derer das Korrektionsmittel (14) eingestellt wird, erfolgt, indem ein durch den sphärischen Abbildungsfehler und einen bekannten durch das Korrektionsmittel (14) induzierten weiteren sphärischen Abbildungsfehler gebildeter Gesamtabbildungsfehler minimiert wird.

3. Verfahren nach Anspruch 1 oder 2, **dadurch gekennzeichnet, dass** durch das Mikroskop (10) ein mechanischer Abstand zwischen dem Objektiv (12) und einer Objektebene (12) ermittelt und der sphärische Abbildungsfehler auf Grundlage dieses mechanischen Abstands ermittelt werden.

4. Verfahren nach Anspruch 3, **dadurch gekennzeichnet, dass** das Ermitteln des mechanischen Abstands zwischen dem Objektiv (12) und der Objektebene (12), das Ermitteln des sphärischen Abbildungsfehlers und das Ermitteln der Stellgröße, anhand derer das Korrektionsmittel (14) eingestellt wird, für die Objektebene und/oder weitere Objektebenen (12) wiederholt durchgeführt werden.

5. Verfahren nach einem der Ansprüche 1 bis 4, **dadurch gekennzeichnet, dass** das Ermitteln des sphärischen Abbildungsfehlers auf Grundlage des Brechungsindex des Deck- oder Tragglases (16) erfolgt.

6. Verfahren nach einem der Ansprüche 1 bis 5, **dadurch gekennzeichnet, dass** zwischen dem Objektiv (12) und dem Deck- oder Tragglas (16) ein Immersionsmedium eingebracht wird und das Ermitteln des sphärischen Abbildungsfehlers auf Grundlage des Brechungsindex des Immersionsmediums erfolgt.

7. Verfahren nach einem der Ansprüche 1 bis 6, **dadurch gekennzeichnet, dass** zur Ermittlung der Stellgröße, anhand derer das Korrektionsmittel (14) eingestellt wird, wenigstens ein Wert der Stellgröße und ein dem Wert der Stellgröße zugeordneter Wert des sphärischen Abbildungsfehlers durch das Objektiv (12) bereitgestellt werden.

8. Verfahren nach Anspruch 7, **dadurch gekennzeichnet, dass** der dem Wert der Stellgröße zugeordnete Wert des sphärischen Abbildungsfehlers als Entwicklungskoeffizienten orthogonaler Polynome, insbesondere Zernike-Polynome, bereitgestellt wird.

9. Mikroskop, umfassend:

ein Objektiv (12) mit einem Korrektionsmittel (14), das zum Korrigieren eines sphärischen Abbildungsfehlers einstellbar ist, und
ein Deck- oder Tragglas (16), **dadurch gekennzeichnet, dass**
das Mikroskop (10) eine Einstelleinrichtung zum Einstellen des Korrektionsmittels (14) hat,
die Einstelleinrichtung ausgebildet ist, den Brechungsindex eines an das Deck- oder Tragglas (16) grenzenden optischen Mediums (22, 24) und die Dicke des Deck- oder Tragglases (16) entlang der optischen Achse des Objektivs (12) zu ermitteln,
die Einstelleinrichtung ausgebildet ist, auf Grundlage des Brechungsindex des optischen Mediums (22, 24) und der Dicke des Deck- oder Tragglases (16) einen sphärischen Abbildungsfehler zu ermitteln, und
die Einstelleinrichtung ausgebildet ist, auf Grundlage des sphärischen Abbildungsfehlers eine Stellgröße zu ermitteln, anhand derer das Korrektionsmittel (14) so einstellbar ist, dass der sphärische Abbildungsfehler korrigiert ist,
wobei Einstelleinrichtung ferner ausgebildet ist, die Stellgröße rechnerisch zu ermitteln, in dem der quadratische Mittelwert der Summe des sphärischen Abbildungsfehlers und eines weiteren durch das Korrektionsmittels (14) induzierten sphärischen Abbildungsfehler über die gesamte Pupille minimiert wird.

10. Mikroskop nach Anspruch 9, **dadurch gekennzeichnet, dass** das Korrektionsmittel (14) wenigstens eine Linse umfasst, die zur Korrektur von Abbildungsfehlern entlang der optischen Achse (O) des Objektivs (12) bewegbar ist.

**Claims**

1. Method for correcting a spherical aberration of a microscope (10) with an objective (12) and a cover or support glass (16), in which a correction means, disposed in the objective (12), is provided for correcting the spherical aberration, **characterized in that** the refractive index of an optical medium (22, 24) bordering the cover or support glass (16) and/or the thickness of the cover or support glass (16) along the optical axis of the objective (12) is determined by the microscope (10),

> based on the refractive index of the optical medium (22, 24) and/or the thickness of the cover or support glass (16), the spherical aberration is determined, and
> based on the spherical aberration, a manipulated variable is determined, by means of which the correction means (14) is adjusted such that the spherical aberration is corrected,
> wherein the manipulated variable is determined mathematically, in which the root mean square of the sum of the spherical aberration and a further spherical aberration, induced by the correction means (14), is minimized over the entire pupil.

2. The method according to claim 1, **characterized in that** the determination of the manipulated variable on the basis of which the correction means (14) is adjusted is carried out by minimizing a total imaging error formed by the spherical imaging error and a known further spherical imaging error induced by the correction means (14).

3. The method according to claim 1 or 2, **characterized in that** a mechanical distance between the objective (12) and an object plane (12) is determined by the microscope (10) and the spherical aberration is determined based on this mechanical distance.

4. The method according to claim 3, **characterized in that** the determination of the mechanical distance between the objective (12) and the object plane (12), the determination of the spherical aberration and the determination of the manipulated variable on the basis of which the correction means (14) is adjusted, are carried out repeatedly for the object plane and/or further object planes (12).

5. The method according to any one of claims 1 to 4, **characterized in that** the determination of the spherical aberration is carried out based on the refractive index of the cover or support glass (16).

6. The method according to any one of claims 1 to 5, **characterized in that** an immersion medium is introduced between the objective (12) and the cover or support glass (16) and the determination of the spherical aberration is carried out based on the refractive index of the immersion medium.

7. The method according to any one of claims 1 to 6, **characterized in that**, in order to determine the manipulated variable on the basis of which the correction means (14) is adjusted, at least one value of the manipulated variable and a value of the spherical aberration associated with the value of the manipulated variable are provided by the objective (12).

8. The method according to claim 7, **characterized in that** the value of the spherical aberration, associated with the value of the manipulated variable, is provided as expansion coefficients of orthogonal polynomials, in particular Zernike polynomials.

9. Microscope, comprising:

> an objective (12) with a correction means (14) which is adjustable to correct a spherical aberration, and
> a cover or support glass (16), **characterized in that**
> the microscope (10) has an adjusting apparatus for adjusting the correction means (14),
> the adjusting apparatus is configured to determine the refractive index of an optical medium (22, 24) bordering the cover or support glass (16) and the thickness of the cover or support glass (16) along the optical axis of the objective (12),
> the adjusting apparatus is configured to determine a spherical aberration, based on the refractive index of the optical medium (22, 24) and the thickness of the cover or support glass (16), and
> the adjusting apparatus is configured to determine, based on the spherical aberration, a manipulated variable, by means of which the correction means (14) can be adjusted such that the spherical aberration is corrected, wherein the adjusting apparatus is further configured to determine the manipulated variable mathematically, in which the root mean square of the sum of the spherical aberration and a further spherical aberration, induced by the correction means (14), is minimized over the entire pupil.

**10.** The microscope according to claim 9, **characterized in that** the correction means (14) comprises at least one lens which is movable along the optical axis (O) of the objective (12) to correct imaging errors.

**Revendications**

**1.** Procédé de correction d'une aberration sphérique d'un microscope (10) comportant un objectif (12) et une lame porte-objet ou lamelle couvre-objet (16), dans lequel un moyen de correction est disposé dans l'objectif (12) pour corriger l'aberration sphérique, **caractérisé en ce que**

le microscope (10) permet de déterminer l'indice de réfraction d'un milieu optique (22, 24) adjacent à la lame porte-objet ou lamelle couvre-objet (16) et/ou l'épaisseur de la lame porte-objet ou lamelle couvre-objet (16) le long de l'axe optique de l'objectif (12),
sur la base de l'indice de réfraction du milieu optique (22, 24) et/ou de l'épaisseur de la lame porte-objet ou lamelle couvre-objet (16), le défaut de représentation sphérique est déterminé, et
sur la base de l'aberration sphérique, une grandeur de réglage est déterminée, à l'aide de laquelle le moyen de correction (14) est réglé, de telle sorte que l'aberration sphérique soit corrigée, la grandeur de réglage étant déterminée par calcul,
dans lequel la moyenne quadratique de la somme de l'aberration sphérique et d'une autre aberration sphérique induite par le moyen de correction (14) est minimisée sur l'ensemble de la pupille.

**2.** Procédé selon la revendication 1, **caractérisé en ce que** la détermination de la grandeur de réglage à l'aide de laquelle le moyen de correction (14) est réglé s'effectue en minimisant une erreur d'image globale formée par l'erreur d'image sphérique et une autre erreur d'image sphérique connue induite par le moyen de correction (14).

**3.** Procédé selon la revendication 1 ou la revendication 2, **caractérisé en ce que** le microscope (10) détermine une distance mécanique entre l'objectif (12) et un plan objet (12) et détermine l'aberration sphérique sur la base de cette distance mécanique.

**4.** Procédé selon la revendication 3, **caractérisé en ce que** la détermination de la distance mécanique entre l'objectif (12) et le plan objet (12), la détermination de l'aberration sphérique et la détermination de la grandeur de réglage à l'aide de laquelle le moyen de correction (14) est réglé sont répétées pour le plan objet et/ou d'autres plans objets (12).

**5.** Procédé selon l'une des revendications 1 à 4, **caractérisé en ce que** la détermination de l'aberration sphérique s'effectue sur la base de l'indice de réfraction de la lame porte-objet ou lamelle couvre-objet (16).

**6.** Procédé selon l'une des revendications 1 à 5, **caractérisé en ce qu'**un milieu d'immersion est introduit entre l'objectif (12) et la lame porte-objet ou lamelle couvre-objet (16) et que la détermination de l'aberration sphérique s'effectue sur la base de l'indice de réfraction du milieu d'immersion.

**7.** Procédé selon l'une des revendications 1 à 6, **caractérisé en ce que**, pour déterminer la grandeur de réglage à l'aide de laquelle le moyen de correction (14) est réglé, au moins une valeur de la grandeur de réglage et une valeur de l'aberration sphérique associée à la valeur de la grandeur de réglage sont fournies par l'objectif (12).

**8.** Procédé selon la revendication 7, **caractérisé en ce que** la valeur de l'aberration sphérique associée à la valeur de la grandeur de réglage est fournie sous forme de coefficients de développement de polynômes orthogonaux, en particulier de polynômes de Zernike.

**9.** Microscope comprenant :

un objectif (12) avec un moyen de correction (14) qui peut être réglé pour corriger une aberration sphérique, et
une lame porte-objet ou lamelle couvre-objet (16), **caractérisé en ce que**
le microscope (10) comporte un dispositif de réglage pour régler le moyen de correction (14),
le dispositif de réglage est conçu pour déterminer l'indice de réfraction d'un milieu optique (22, 24) adjacent à la lame porte-objet ou lamelle couvre-objet (16) et l'épaisseur de la lame porte-objet ou lamelle couvre-objet (16) le long de l'axe optique de l'objectif (12),
le dispositif de réglage est conçu pour déterminer un défaut de représentation sphérique sur la base de l'indice de réfraction du milieu optique (22, 24) et de l'épaisseur de la lamelle porte-objet ou couvre-objet (16), et

le dispositif de réglage est conçu pour déterminer, sur la base de l'aberration sphérique, une grandeur de réglage à l'aide de laquelle le moyen de correction (14) peut être réglé de manière à corriger l'aberration sphérique, le dispositif de réglage étant en outre conçu pour déterminer mathématiquement la grandeur de réglage, dans lequel la valeur quadratique moyenne de la somme de l'aberration sphérique et d'une autre aberration sphérique induite par le moyen de correction (14) est minimisée sur l'ensemble de la pupille.

10. Microscope selon la revendication 9, **caractérisé en ce que** le moyen de correction (14) comprend au moins une lentille qui est mobile pour corriger les aberrations le long de l'axe optique (O) de l'objectif (12).

Figur 1

Ermitteln der Dicke des Deckglases — S1

Ermitteln des Brechungsindex des optischen Mediums — S2

Ermitteln des sphärischen Abbildungsfehlers — S3

S4

Ermitteln des Abstandes zwischen Objektiv und Deckglas

P1

Ermitteln des Stellwerts des Korrektionsmittels — S5

S6

Einstellen des Korrektionsmittels auf den Stellwert

## Figur 2

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- US 6563634 B2
- US 9411142 B2
- US 20050024718 A1
- EP 1988417 A1
- DE 102017105928 A1

### In der Beschreibung aufgeführte Nicht-Patentliteratur

- **P. TÖRÖK et al.** Electromagnetic diffraction of light focused through a planar interface between materials of mismatched refractive indices: an integral representation. *J. Opt. Soc. Am. A*, 1995, vol. 12, 325-332
- Numerical Recipes, The Art of Scientific Computing. Cambridge University Press, 2007, 487-502